# EUROPEAN PATENT APPLICATION

(11) **EP 4 559 610 A1**
(43) Date of publication of application: **28.05.2025**
(21) Application number: 23859939.3
(22) Date of filing: 01.08.2023
(51) Int. Cl.: B23H 1/10

(54) **ELECTRIC DISCHARGE MACHINE, AND CHEMICAL AGENT ADDITION METHOD**

(30) Priority: 02.09.2022 WO PCT/JP2022/033154
(71) Applicant: FANUC CORPORATION, Oshino-mura Minamitsuru-gun Yamanashi 401-0597 (JP)
(72) Inventor: KASAI Hirotsugu, Minamitsuru-gun, Yamanashi 401-0597 (JP); MAKINO Yoshinori, Minamitsuru-gun, Yamanashi 401-0597 (JP)
(74) Representative: Keil & Schaafhausen Patentanwälte PartGmbB
(86) International application number: PCT/JP2023/028044
(87) International publication number: WO 2024/048170

(57) **Abstract**

An electric discharge machine comprising an electric discharge processing unit that performs electric discharge processing on a workpiece in a processing liquid, and a filter that removes sludge included in the processing liquid, wherein if the workpiece is made of an aluminum-based material, the electric discharge machine performs electric discharge processing using a processing liquid containing positive ions of a metal having a standard electrode potential lower than the standard electrode potential of aluminum.

## Description

### TECHNICAL FIELD

The present disclosure relates to an electric discharge machine and a chemical agent addition method.

### BACKGROUND ART

WO 2006/126248 A1 discloses an electric discharge machine.

### SUMMARY OF THE INVENTION

Recently, there is a demand for further improved electric discharge machines and further improved chemical agent addition methods.

A first aspect of the present disclosure is an electric discharge machine including: an electric discharge machining unit configured to perform electric discharge machining on a workpiece in a working fluid; and a filter configured to remove sludge contained in the working fluid, wherein, when the workpiece is made of an aluminum-based material, the electric discharge machine performs the electric discharge machining by using the working fluid containing a cation of a metal having a standard electrode potential lower than a standard electrode potential of aluminum.

A second aspect of the present disclosure is a chemical agent addition method for adding a chemical agent to a working fluid of an electric discharge machine including an electric discharge machining unit that performs electric discharge machining on a workpiece in the working fluid and a filter that removes sludge contained in the working fluid, wherein by adding a first chemical agent to the working fluid, the working fluid contains a cation of a first metal having a standard electrode potential lower than a standard electrode potential of aluminum, and by adding a second chemical agent to the working fluid, the working fluid contains a cation of a second metal having a standard electrode potential lower than the standard electrode potential of the first metal, the chemical agent addition method including a chemical agent determination step of determining a chemical agent to be added to the working fluid; and an addition step of, when the first chemical agent is added to the working fluid, increasing an amount of the first chemical agent to be added, as compared with an amount of the second chemical agent to be added when the second chemical agent is added to the working fluid, and when the second chemical agent is added to the working fluid, reducing the amount of the second chemical agent to be added, as compared with the amount of the first chemical agent to be added when the first chemical agent is added to the working fluid.

### BRIEF DESCRIPTION OF DRAWINGS

[FIG. 1] FIG. 1 is a schematic view of an electric discharge machine;
[FIG. 2] FIG. 2 is a block diagram showing a configuration of a control device;
[FIG. 3] FIG. 3 is a graph showing the standard electrode potential of a metal of a cation contained in a dielectric working fluid and the life time of a filter; and [FIG. 4] FIG. 4 is a flowchart showing a chemical agent addition process executed in the control device.

### DETAILED DESCRIPTION OF THE INVENTION

An electric discharge machine performs electric discharge machining on a workpiece in a working fluid (dielectric working fluid). The working fluid used in the electric discharge machining contains sludge generated during the electric discharge machining. The working fluid used in the electric discharge machining is recycled after sludge has been removed therefrom by a filter. The sludge adheres to the filter as a result of filtration of the working fluid.

When the filter is clogged by the adhesion of the sludge and the resistance of the filter thus increases, the user needs to replace the filter. The filter after use is usually discarded without being reused. In order to reduce the number of times of replacement of the filter and to reduce the number of discarded filters, it is required to extend the life time of the filter.

When the electric discharge machine performs electric discharge machining on a workpiece made of an aluminum-based material, the life time of the filter for the electric discharge machine is shorter than when the electric discharge machine performs electric discharge machining on a workpiece made of an iron-based material. When electric discharge machining is performed on a workpiece made of an aluminum-based material, aluminum hydroxide is generated in the dielectric fluid. It is considered that aluminum hydroxide is gelled due to contact with water for a long time, and the gelled aluminum hydroxide adheres to the filter, thereby shortening the life time of the filter. The life time of the filter for electric discharge machine in the case where electric discharge machining is performed on a workpiece made of an aluminum-based material is 10% to 25% of the life time of the filter for electric discharge machine in the case where electric discharge machining is performed on a workpiece made of an iron-based material.

Therefore, when the electric discharge machine performs electric discharge machining on a workpiece made of an aluminum-based material, the number of times of replacement of the filter by the user increases, and the number of discarded filters increases. An object of the technology according to the present disclosure is to provide an electric discharge machine and a chemical agent addition method capable of extending the life time of a filter of the electric discharge machine when electric discharge machining is performed on an aluminum-based material.

### [Embodiment]

### [Configuration of Electric Discharge Machine]

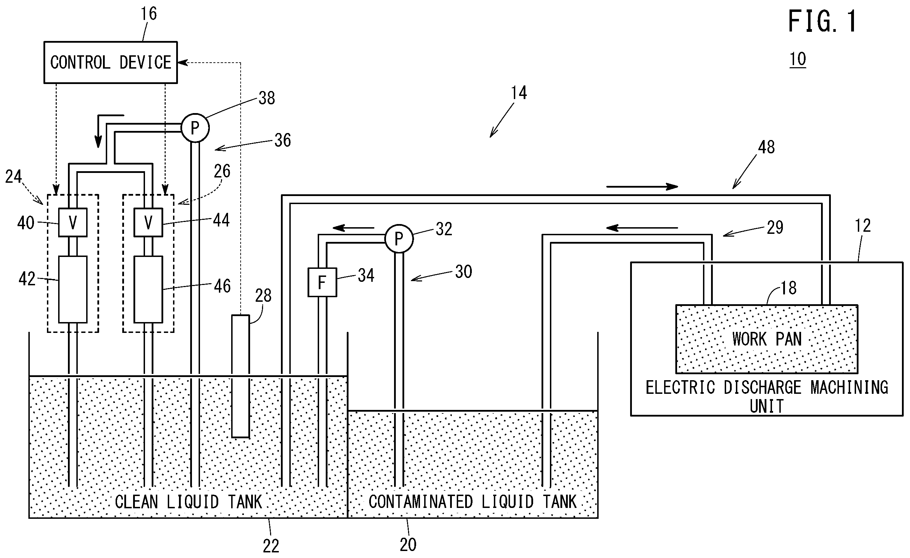

FIG. 1 is a schematic view of an electric discharge machine 10. The electric discharge machine 10 includes an electric discharge machining unit 12, a working fluid processing unit 14, and a control device 16. The electric discharge machine 10 is a wire electric discharge machine.

The electric discharge machining unit 12 includes a work pan 18. The electric discharge machining unit 12 performs electric discharge machining on a workpiece in a working fluid (dielectric working fluid) stored in the work pan 18.

The working fluid processing unit 14 includes a contaminated liquid tank 20, a clean liquid tank 22, an ion exchange unit 24, an addition unit 26, and a resistivity value measurement unit 28.

The working fluid used in the electric discharge machining is discharged from the work pan 18 to the contaminated liquid tank 20 through a fluid discharge path 29. The working fluid discharged from the work pan 18 contains sludge generated during electric discharge machining.

The working fluid stored in the contaminated liquid tank 20 is sent to the clean liquid tank 22 through a filtration path 30. The filtration path 30 is provided with a first pump 32 and a filter 34. The first pump 32 sends the working fluid from the contaminated liquid tank 20 to the clean liquid tank 22. The filter 34 filters the working fluid sent from the contaminated liquid tank 20 to the clean liquid tank 22, and removes sludge from the dielectric working fluid.

The working fluid stored in the clean liquid tank 22 circulates between the clean liquid tank 22 and the ion exchange unit 24 or between the clean liquid tank 22 and the addition unit 26 through a circulation path 36. A second pump 38 is provided in the circulation path 36. The second pump 38 supplies the working fluid in the clean liquid tank 22 to the ion exchange unit 24 or the addition unit 26.

The ion exchange unit 24 includes a first valve 40 and an ion exchange resin 42. When the electric discharge machining unit 12 performs electric discharge machining on a workpiece made of a material other than an aluminum-based material, the first valve 40 is opened, and a second valve 44 described below is closed. Thus, the working fluid is supplied from the clean liquid tank 22 to the ion exchange unit 24. The ion exchange resin 42 captures specific ions contained in the working fluid passing through the ion exchange resin 42 and releases the other ions.

The addition unit 26 includes the second valve 44 and a chemical agent storage unit 46. When the electric discharge machining unit 12 performs electric discharge machining on a workpiece made of an aluminum-based material, the second valve 44 is opened and the first valve 40 is closed. Thus, the working fluid is supplied from the clean liquid tank 22 to the chemical agent storage unit 46.

The chemical agent storage unit 46 adds a chemical agent for reducing the resistivity, to the working fluid passing through the chemical agent storage unit 46. Examples of the chemical agent added to the working fluid include sodium hydrogen sulfite (sodium bisulfite), sodium carbonate, sodium sulfate, calcium hydroxide, sodium disulfite (sodium pyrosulfite), potassium disulfite (potassium pyrosulfite), magnesium sulfate, and magnesium sulfate heptahydrate. The chemical agent may be a compound other than those described above. The chemical agent may comprise one kind of compound. The chemical agent may comprise more than one kind of compound.

By adding the chemical agent to the working fluid, the working fluid contains one or more kinds of cations among cations of metals having a standard electrode potential lower than the standard electrode potential of aluminum. The cations of the metal having a standard electrode potential lower than the standard electrode potential of aluminum are lithium ion, potassium ion, calcium ion, sodium ion, and magnesium ion. That is, the working fluid may contain one or more kinds of cations selected from among lithium ion, potassium ion, calcium ion, sodium ion, and magnesium ion.

In addition, by adding the chemical agent to the working fluid, the working fluid contains one or more kinds of anions among the following anions. The anions are sulfate ion, sulfite ion, disulfite ion, bisulfite ion (hydrogen sulfite ion), hydroxide ion, nitrate ion, and nitrite ion. That is, the working fluid may contain one or more kinds of anions selected from among sulfate ion, sulfite ion, disulfite ion, bisulfite ion, hydroxide ion, nitrate ion, and nitrite ion.

The resistivity value measurement unit 28 measures the resistivity of the working fluid stored in the clean liquid tank 22. The addition unit 26 is controlled by the control device 16 based on the resistivity. The working fluid with the adjusted resistivity is sent from the clean liquid tank 22 to the work pan 18 through a supply path 48.

### [Configuration of Control Device]

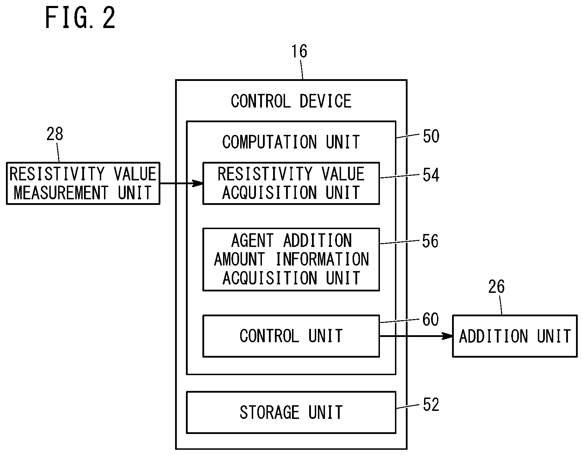

FIG. 2 is a block diagram showing the configuration of the control device 16. The control device 16 includes a computation unit 50 and a storage unit 52. The computation unit 50 includes a processor, for example, such as a CPU (Central Processing Unit), a GPU (Graphics Processing Unit), or the like. The computation unit 50 includes a resistivity value acquisition unit 54, an agent addition amount information acquisition unit 56, and a control unit 60. The resistivity value acquisition unit 54, the agent addition amount information acquisition unit 56, and the control unit 60 are realized by the computation unit 50 executing a program stored in the storage unit 52. At least a part of the resistivity value acquisition unit 54, the agent addition amount information acquisition unit 56, and the control unit 60 may be realized by an integrated circuit such as an application specific integrated circuit (ASIC) or a field-programmable gate array (FPGA). At least a part of the resistivity value acquisition unit 54, the agent addition amount information acquisition unit 56, and the control unit 60 may be realized by an electronic circuit including a discrete device.

The storage unit 52 is configured by a volatile memory (not illustrated) and a nonvolatile memory (not illustrated), which are computer-readable storage media. The volatile memory is, for example, a RAM (Random Access Memory), or the like. The nonvolatile memory, for example, is a ROM (Read Only Memory), a flash memory, or the like. For example, data and the like are stored in the volatile memory. For example, programs, tables, maps, and the like are stored in the nonvolatile memory. At least a portion of the storage unit 52 may be provided in the aforementioned processor, integrated circuit, or the like. At least a part of the storage unit 52 may be mounted on a device connected to the electric discharge machine 10 via a network.

The resistivity value acquisition unit 54 acquires information on the resistivity value of the dielectric working fluid stored in the clean liquid tank 22, from the resistivity value measurement unit 28. The agent addition amount information acquisition unit 56 acquires chemical agent addition amount information from the storage unit 52. The chemical agent addition amount information is information about the amount of chemical agent to be added to the working fluid when the workpiece is made of an aluminum-based material. The storage unit 52 stores the chemical agent addition amount information for each chemical agent. The control unit 60 controls the addition unit 26. A method of controlling the addition unit 26 will be described later in detail.

### [Experimental Results]

The inventors of the present invention conducted an experiment for determining the life time of the filter 34 by performing electric discharge machining on a workpiece made of an aluminum-based material in a plurality of types of dielectric working fluids containing different cations.

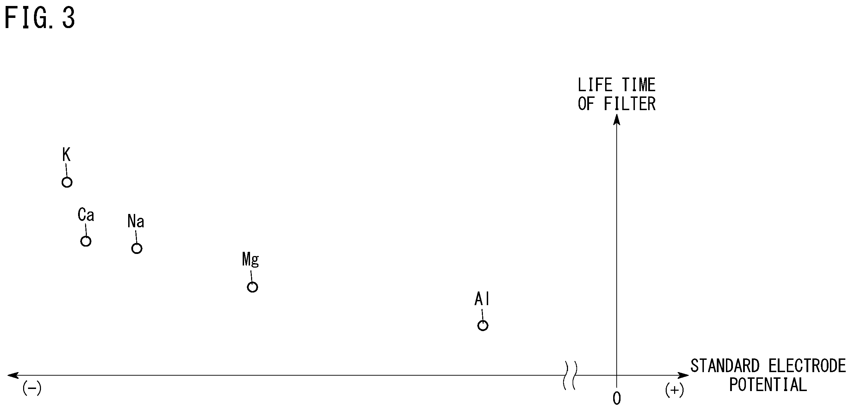

FIG. 3 is a graph showing the standard electrode potential of the metal of the cation contained in the working fluid and the life time of the filter 34. The resistivity values of the working fluids containing cations of the metals are the same.

As shown in FIG. 3, it was confirmed that the life time of the filter 34 in the case where the cations of a metal having a standard electrode potential lower than the standard electrode potential of aluminum are contained in the working fluid is longer than the life time of the filter 34 in the case where aluminum ions are contained in the working fluid.

As shown in FIG. 3, it was confirmed that the lower the standard electrode potential of the metal of the cation contained in the working fluid, the longer the life time of the filter 34.

When sodium hydrogen sulfite is added to the working fluid, aluminum oxide and aluminum oxide trihydrate are generated in the working fluid during electric discharge machining of a workpiece made of an aluminum-based material. On the other hand, when sodium hydrogen sulfite is not added to the working fluid, aluminum hydroxide is produced in the working fluid during electric discharge machining of a workpiece made of an aluminum-based material. It is considered that, by adding sodium hydrogen sulfite to the working fluid, aluminum oxide and aluminum oxide trihydrate are generated, instead of aluminum hydroxide which shortens the life time of the filter 34.

Further, it is considered that the generation of aluminum hydroxide is also inhibited when sodium carbonate, sodium sulfate, calcium hydroxide, sodium disulfite (sodium pyrosulfite), potassium disulfite (potassium pyrosulfite), magnesium sulfate, or magnesium sulfate heptahydrate is added to the working fluid.

### [Chemical Agent Addition Treatment]

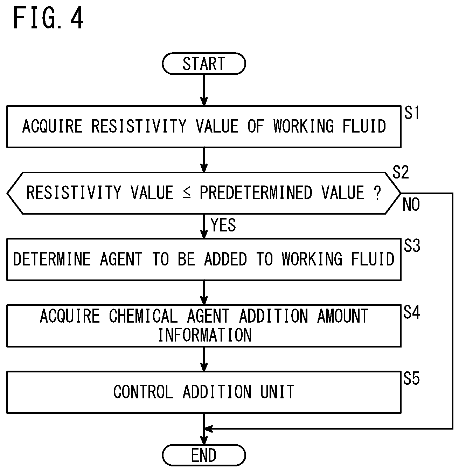

FIG. 4 is a flowchart showing a chemical agent addition process executed by the control device 16. The chemical agent addition process is repeatedly executed at a predetermined cycle while a workpiece made of an aluminum-based material is being machined in the electric discharge machining unit 12.

In step S1, the resistivity value acquisition unit 54 acquires information on the resistivity value of the working fluid, from the resistivity value measurement unit 28. Next, the process transitions to step S2.

In step S2, the control unit 60 determines whether or not the resistivity value of the working fluid is equal to or less than a predetermined value, based on the information of the resistivity value acquired by the resistivity value acquisition unit 54. If the resistivity value of the working fluid is equal to or less than the predetermined value, the process proceeds to step S3, and if the resistivity value of the working fluid is greater than the predetermined value, the chemical agent addition process is terminated.

In step S3, the control unit 60 determines the chemical agent to be added to the working fluid. Thereafter, the process transitions to step S4. The chemical agent to be added to the working fluid may be input to the control device 16 by a user of the electric discharge machine 10.

In step S4, the agent addition amount information acquisition unit 56 acquires chemical agent addition amount information from the storage unit 52. The storage unit 52 stores chemical agent addition amount information that is information on the amount of chemical agent to be added to the working fluid, for each chemical agent. Thereafter, the process transitions to step S5.

In step S5, the control unit 60 controls the addition unit 26 based on the agent addition amount information. Thereafter, the chemical agent addition process is terminated. The control unit 60 controls a chemical agent supply device (not shown) to supply the chemical agent of the addition amount based on the chemical agent addition amount information corresponding to the chemical agent determined in step S3, to the chemical agent storage unit 46. Thereafter, the control unit 60 opens the second valve 44. Thus, the chemical agent of the addition amount based on the chemical agent addition amount information is added.

### [Amount of Agent to be Added]

The amount of the chemical agent to be added is determined according to the standard electrode potential of the metal constituting the compound contained in the chemical agent. The amount of the chemical agent to be added will be described below by using a first chemical agent and a second chemical agent as examples.

The standard electrode potential of the metal constituting the compound contained in the first chemical agent is lower than the standard electrode potential of aluminum. For example, a chemical agent containing magnesium sulfate can be selected as the first chemical agent. The working fluid contains magnesium cations by adding the chemical agent containing magnesium sulfate to the working fluid. The standard electrode potential of magnesium is lower than the standard electrode potential of aluminum.

The standard electrode potential of the metal constituting the compound contained in the second chemical agent is lower than the standard electrode potential of the metal constituting the compound contained in the first chemical agent. For example, a chemical agent containing sodium sulfate can be selected as the second chemical agent. The chemical agent containing sodium sulfate is added to the working fluid, so that the working fluid contains sodium cations. The standard electrode potential of sodium is lower than the standard electrode potential of magnesium.

The storage unit 52 stores chemical agent addition amount information indicating that the amount of the second chemical agent to be added when the second chemical agent is added to the working fluid is smaller than the amount of the first chemical agent to be added when the first chemical agent is added to the working fluid.

As shown in FIG. 3, even when the resistivity value of the working fluid is the same, the life time of the filter 34 in the case where the working fluid contains sodium cations is longer than the life time of the filter 34 in the case where the working fluid contains magnesium cations. Therefore, when the first chemical agent is added to the working fluid, the amount of the first chemical agent added is increased as compared with the amount of the second chemical agent added when the second chemical agent is added to the working fluid, whereby the life time of the filter 34 can be extended similarly. In addition, when the second chemical agent is added to the working fluid, the life time of the filter 34 can be extended similarly even if the amount of the second chemical agent added is reduced as compared with the amount of the first chemical agent added when the first chemical agent is added to the working fluid.

In the above description, the control device 16 controls the addition unit 26 to add the chemical agent to the working fluid. However, the user of the electric discharge machine 10 may add the chemical agent to the working fluid.

When the user adds a chemical agent to the working fluid, the user determines the chemical agent to be added. When the first chemical agent is added to the working fluid, the user increases the amount of the first chemical agent to be added, compared with the amount of the second chemical agent to be added when the second chemical agent is added to the working fluid. On the other hand, when the second chemical agent is added to the working fluid, the user reduces the amount of the second chemical agent to be added, compared with the amount of the first chemical agent to be added when the first chemical agent is added to the working fluid.

The following Supplementary Notes are further disclosed in relation to the above embodiment.

### (Supplementary Note 1)

The electric discharge machine (10) includes the electric discharge machining unit (12) for performing electric discharge machining on the workpiece in the working fluid and the filter (34) for removing sludge contained in the working fluid. The electric discharge machine performs electric discharge machining by using the working fluid containing a cation of a metal having a standard electrode potential lower than the standard electrode potential of aluminum when the workpiece is made of an aluminum-based material.

### (Supplementary Note 2)

In the electric discharge machine according to Supplementary Note 1, the working fluid may contain one or more kinds of anions selected from among sulfate ion, sulfite ion, disulfite ion, bisulfite ion, hydroxide ion, nitrate ion, and nitrite ion.

### (Supplementary Note 3)

In the electric discharge machine according to Supplementary Note 1 or 2, by adding the first chemical agent to the working fluid, the working fluid may contain the cation of the first metal having a standard electrode potential lower than the standard electrode potential of aluminum, and by adding the second chemical agent to the working fluid, the working fluid may contain the cation of the second metal having a standard electrode potential lower than the standard electrode potential of the first metal, the electric discharge machine further including: the agent addition amount information acquisition unit (56) configured to acquire chemical agent addition amount information from the storage unit (52) that stores the chemical agent addition amount information, the chemical agent addition amount information being information on the amount of a chemical agent to be added to the working fluid when the workpiece is made of the aluminum-based material; the addition unit (26) configured to add the chemical agent to the working fluid; and the control unit (60) configured to control the addition unit based on the chemical agent addition amount information, the storage unit may store the chemical agent addition amount information that causes the amount of the second chemical agent to be added when the second chemical agent is added to the working fluid to be smaller than the amount of the first chemical agent to be added when the first chemical agent is added to the working fluid, and wherein, when the first chemical agent is added to the working fluid, the control unit may control the addition unit based on the chemical agent addition amount information to increase the amount of the first chemical agent to be added, as compared with the amount of the second chemical agent to be added when the second chemical agent is added to the working fluid, and when the second chemical agent is added to the working fluid, the control unit may control the addition unit based on the chemical agent addition amount information to reduce the amount of the second chemical agent to be added, as compared with the amount of the first chemical agent to be added when the first chemical agent is added to the working fluid.

### (Supplementary Note 4)

The chemical agent addition method for adding the chemical agent to the working fluid of the electric discharge machine including the electric discharge machining unit that performs electric discharge machining on the workpiece in the working fluid and the filter that removes sludge contained in the working fluid, wherein by adding the first chemical agent to the working fluid, the working fluid contains the cation of the first metal having a standard electrode potential lower than the standard electrode potential of aluminum, and by adding the second chemical agent to the working fluid, the working fluid contains the cation of the second metal having a standard electrode potential lower than the standard electrode potential of the first metal, the chemical agent addition method including: the chemical agent determination step of determining the chemical agent to be added to the working fluid; and the addition step of, when the first chemical agent is added to the working fluid, increasing the amount of the first chemical agent to be added, as compared with the amount of the second chemical agent to be added when the second chemical agent is added to the working fluid, and when the second chemical agent is added to the working fluid, reducing the amount of the second chemical agent to be added, as compared with the amount of the first chemical agent to be added when the first chemical agent is added to the working fluid.

Although the present disclosure has been described in detail, the present disclosure is not limited to the above-described individual embodiments. Various additions, substitutions, modifications, partial deletions, and the like can be made to these embodiments without departing from the essence and gist of the present disclosure or without departing from the essence and gist of the present disclosure derived from the content described in the claims and equivalents thereof. These embodiments may also be implemented in combination. For example, in the above-described embodiments, the order of operations and the order of processes are shown as examples, and the present invention is not limited to them. The same applies to a case where numerical values or mathematical equations are used in the description of the above-described embodiments.

### REFERENCE SIGNS LIST

10: electric discharge machine
12: electric discharge machining unit
26: addition unit
34: filter
52: storage unit
56: agent addition amount information acquisition unit
60: control unit

## Claims

1. An electric discharge machine comprising:
an electric discharge machining unit configured to perform electric discharge machining on a workpiece in a working fluid; and
a filter configured to remove sludge contained in the working fluid,
wherein, when the workpiece is made of an aluminum-based material, the electric discharge machining is performed using the working fluid containing a cation of a metal having a standard electrode potential lower than a standard electrode potential of aluminum.

2. The electric discharge machine according to claim 1, wherein
the working fluid contains one or more kinds of anions selected from among sulfate ion, sulfite ion, disulfite ion, bisulfite ion, hydroxide ion, nitrate ion, and nitrite ion.

3. The electric discharge machine according to claim 1 or 2, wherein
by adding a first chemical agent to the working fluid, the working fluid contains a cation of a first metal having a standard electrode potential lower than the standard electrode potential of aluminum, and
by adding a second chemical agent to the working fluid, the working fluid contains a cation of a second metal having a standard electrode potential lower than the standard electrode potential of the first metal,
the electric discharge machine further comprising:
an agent addition amount information acquisition unit configured to acquire chemical agent addition amount information from a storage unit that stores the chemical agent addition amount information, the chemical agent addition amount information being information on an amount of a chemical agent to be added to the working fluid when the workpiece is made of the aluminum-based material;
an addition unit configured to add the chemical agent to the working fluid; and
a control unit configured to control the addition unit based on the chemical agent addition amount information,
wherein
the storage unit stores the chemical agent addition amount information that causes an amount of the second chemical agent to be added when the second chemical agent is added to the working fluid, to be smaller than an amount of the first chemical agent to be added when the first chemical agent is added to the working fluid, and
wherein
when the first chemical agent is added to the working fluid, the control unit controls the addition unit based on the chemical agent addition amount information to increase the amount of the first chemical agent to be added, as compared with the amount of the second chemical agent to be added when the second chemical agent is added to the working fluid, and
when the second chemical agent is added to the working fluid, the control unit controls the addition unit based on the chemical agent addition amount information to reduce the amount of the second chemical agent to be added, as compared with the amount of the first chemical agent to be added when the first chemical agent is added to the working fluid.

4. A chemical agent addition method for adding a chemical agent to a working fluid of an electric discharge machine including an electric discharge machining unit that performs electric discharge machining on a workpiece in the working fluid and a filter that removes sludge contained in the working fluid,
wherein
by adding a first chemical agent to the working fluid, the working fluid contains a cation of a first metal having a standard electrode potential lower than a standard electrode potential of aluminum, and
by adding a second chemical agent to the working fluid, the working fluid contains a cation of a second metal having a standard electrode potential lower than the standard electrode potential of the first metal,
the chemical agent addition method comprising:
a chemical agent determination step of determining a chemical agent to be added to the working fluid; and
an addition step of, when the first chemical agent is added to the working fluid, increasing an amount of the first chemical agent to be added, as compared with an amount of the second chemical agent to be added when the second chemical agent is added to the working fluid, and when the second chemical agent is added to the working fluid, reducing the amount of the second chemical agent to be added, as compared with the amount of the first chemical agent to be added when the first chemical agent is added to the working fluid.
